(19)

**Europäisches Patentamt**
**European Patent Office**
**Office européen des brevets**

(11) **EP 4 656 511 A1**

(12) **EUROPEAN PATENT APPLICATION**

(43) Date of publication:
**03.12.2025 Bulletin 2025/49**

(21) Application number: **24179056.7**

(22) Date of filing: **30.05.2024**

(51) International Patent Classification (IPC):
**B64B 1/50** *(2006.01)* **B64U 10/30** *(2023.01)*
**B64U 10/60** *(2023.01)* **B64F 1/36** *(2024.01)*
**G01S 5/02** *(2010.01)* **G01S 5/20** *(2006.01)*
**G06T 7/55** *(2017.01)*

(52) Cooperative Patent Classification (CPC):
**B64F 1/36; B64B 1/50; B64U 10/30; B64U 10/60;**
**G01S 3/801;** B64U 10/00; G01S 3/808

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicants:
• **Porubcan, Róbert**
  **018 64 Koseca (SK)**

• **Cesko, Vladimír**
  **018 61 Belusa (SK)**

(72) Inventors:
• **Porubcan, Róbert**
  **018 64 Koseca (SK)**
• **Cesko, Vladimír**
  **018 61 Belusa (SK)**

(74) Representative: **Porubcan, Róbert**
**Maticna 2**
**900 28 Ivanka pri Dunaji (SK)**

(54) **DEVICE AND METHOD FOR DETECTING DRONES**

(57)     The microphone (6) is carried by the balloon (1) which is bound to the point (2) of binding by means of the rope (5) which aside from its mechanical function preferably also serves the function of data transfer or even an energy transfer. The microphone (6) is placed within a hung unit (4). The hung unit (4) is equipped by a stabilizer, preferably the stabilizer includes a stabilizing surface (8) and/or the stabilizing body (9). The device has an element to determine the actual position, the element can include a sensor of the slope *beta* of the axis X of attachment against the horizontal plane, and the sensor of angular position *alpha* between north - south orientation and the projection of the axis X of the attachment to the horizontal plane.

Fig. 2

## Description

## Field of technology

The invention concerns a device, a system and a method of recognition of flying objects, mainly UAV, drones, airplanes, by means of audio data analysis.

## Prior state of the art

Publication WO 2017077348 discloses detection by means of microphones, which capture the noise in the space and determine the direction of the source of the noise on the basis of lag of arrival of sound wave for individual microphones distributed in the field. The disadvantage of this approach is high level of noise. The spread of the sound between horizontal layers of the sound depends on the temperature layering, on the wind, whereby the microphone filed can be present in the acoustic shadow where it does not detect any acoustic wave. This deficiency is partially remedied by publication US 11594141, according to which the microphone fields disclosed in the previous publication are carried in the air by airships. The airships are tied to towers and are maintained in the set position, which, however, requires that they are propelled by the propeller. The microphones field board has a disadvantage in that it can only assess the acoustic signal coming from a single half-space (delimited by the board's plane) and in fact it can only effectively process even smaller part of space, until ca. 110°. Aside from the position, the airship must also maintain correct angle of rotation of the field board. The source of the noise from the moving propeller of the airship is approximately in the same frequency scope and it is in a very close position to the microphone field, which leads to problems with the interpretation of the measured data. The airship tied to the tower is visible and its position can be determined based on the position of the tower, and in case of military or terrorist attack the airship will be destroyed as a priority.

A technical solution is needed and not known which will identify drones at large distances based on the acoustic spectrum, which is generated as an aerodynamic noise of the propeller. The new solution shall be reliable, technologically simple and easy to mass produce, and it should be resistant to jamming.

## Essence of the invention

The invention is further defined in claims 1 to 15. The deficiencies in the prior art are significantly remedied by the drone detection device which includes at least one microphone and an assessment unit connected with the microphone, where at least one microphone is placed above the ground on a flying object according to this invention, whose essence lies in the fact, that the microphone is carried by bound (tethered, attached) engineless balloon. The bound balloon lacks means for active evening (stabilization) of its position exactly perpendicularly above the point of binding (attachment), that is, it is not propelled by any engine which would compensate for the influence of wind; the bound balloon is carried by the wind to the degree the rope allows. The rope physically connects the balloon and the point of binding. The altitude of the balloon depends on the length and slope of the rope, the latter caused by influence of wind upon the balloon. The microphone and, eventually, an assessment unit, too, as well as an element for determination of the position can be part of the hung (suspended) unit, whereby the unit is hung below the balloon. The body of the hung unit is connected to the bottom of the balloon or it is hung in certain distance below the balloon.

"Balloon" in this file denotes a body filled with gas that is lighter than the ambient atmosphere, without the exact specification of the gas and irrespective of the outer construction of the cover (coat). The term "rope" is to be understood broadly as any mean for mechanical tethering of the balloon. "Rope" denotes a bundle, too, and a non-woven mean, too, such as a single fiber. The "point of binding" in this file denotes a place to which the ballon is bound / tethered. The point of binding can be a moving object, too, such as a man, a vehicle, a vessel floating on the surface of the water, but it can also be a building, a tower, a mast, and so on.

Crucial element of the invention is the use of engineless bound balloon instead of bound airship which stabilizes its position and orientation by the propeller and therefore emits the noise itself. The tests have shown that it is preferable to use fewer microphones compared to the field board, without the need to measure a phase shift of the signal between the microphones, which requires a higher computing capacity, or high data permeability of the connection towards the point of binding, respectively. The flying vehicle pursuant to US 11594141 always contains elements to maintain position above the point of binding and also means for directional orientation of the microphones field. Only an engine - a reactive engine or a propeller engine - can ensure that the position and orientation in the air is maintained. This decreases the actual scope of detection, since the engine is close to the microphone. The proposed invention is based on an approach where the balloon is freely carried by the wind, and therefore its position and height are changing. The data from the sensors of the position and orientation of the balloon are used to assess the direction and distance of the detected drone. This brings only small complication in the data processing algorithm, but it significantly increases the detection's sensitivity.

It is preferable of the coat (cover) of the balloon is transparent or translucent, which makes it more difficult to visually detect it. The human eye resolution ranges from 0,4 arcminutes to 1,0 arcminute, which means that a man commonly sees an object with size from 0,05 m to 0,14 m at distance of 500 meters. The elements placed below the balloon in the altitude (mainly hung unit) should not surpass certain dimensional boundaries: the smaller of the dimensions should always be less than 0,05 m to 0,14 m. The basic draft relationship for helium-filled balloon is

$$r = (3. \ F_{vz}/126,209)^{-3}$$

where $F_{vz}$ is a required buoyancy force in N and r is radius in meters.

An arrangement is also possible where the rope is formed by a tube or includes a tube or a hollow socket by which the balloon can be re-filled with a respective gas.

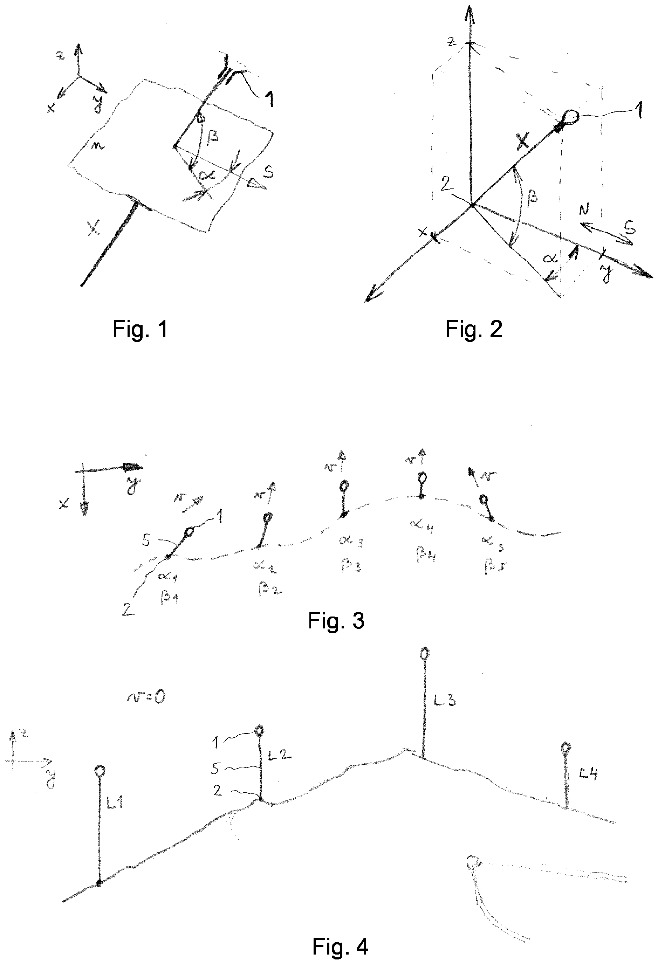

The bound balloon changes the position pursuant to the air flow, which is why the device is equipped by an actual balloon's position and rotation determining element, or element to determine the position and rotation of the hung unit, respectively, the latter being present in a known distance below the balloon. This element can be a standard GNSS (GPS/GLONASS/Galileo/Bei-Dou/IRNSS) device, but in case of military conflict GNSS signal may not be available. The disadvantage of GNNS chip is relatively high consumption of energy. In order to determine the balloon's - or hung unit's, respectively - position, one can preferably use the sensor of the rope's angle (slope), and a sensor of the rotation of the balloon and/or the hung unit, or a compass, respectively, the latter, for example, in the form of magneto-resistive sensor, whereby the relative position between the sensor of the rope's angle and the rotation sensor or compass, respectively, is known and fixed. The compass determines the rotation of the sensor of the rope's angle compared to the position north - south. Three data - rope's angle *beta,* rope's length, and orientation *alpha* from the compass - suffices for simple calculation of an immediate position of the balloon in the x,y,z coordinates system pursuant to figure 1. The actual altitude is "z" in the coordinate system and it is calculated pursuant to angle *beta* and rope's length. When proceeding pursuant to certain aspects of the invention, it will be preferable of the position is determined after the detection of an event, which decreases the energy consumption in stand-by regime. The element for determining the actual position of the balloon and/or hung unit can be place in the point of binding.

The microphone (or multiple microphones pursuant to further description) is placed in the hung unit. The hung unit hangs directly on the balloon; for example, the upper part of the body of the hung unit can form a cap for the balloon's mouth, or the hung unit can be hung on the rope below the balloon in certain distance, for example 2 m, with an intention to distance itself from the noise generated by the air flowing around the balloon.

The balloon and/or the hung unit is preferably equipped by the stabilizer which stabilizes the even position of the balloon in the wind without oscillation in frequencies when the system lacks low damping. The stabilizer in this document is not an engine with the propeller and its function is not to keep the balloon in the position perpendicular onto the point of binding, but it is to rule out sudden changes in position and to limit rotational vibrations.

In one of the preferable arrangements the stabilizer has an aerodynamically function surface whose center of gravity is outside the axis of attachment (binding). Such surface can have a form of at least one thin wing which spreads in a basically horizontal plane. The normal line of the wing is perpendicular onto the axis of attachment. The wind carries the balloon into the respective even position, whereby the air flows around the wing and this flow acts against the rotation of the wing and therefore the balloon and/or the hung unit, too. The surface of the wing is sufficient up to 5%, preferably up to 3% of the resistance surface of the balloon.

It is preferable if the stabilizer includes a stabilizing body which by its weight at the inclined (sloped) position of the rope produces a strong force moment at the arm or the lever, respectively, at a certain distance from the axis of attachment. The stabilizing body is preferably slidable or tiltable upon the course delimited by two end positions. The first end position corresponds to the state in which the weight of the stabilizing body acts in the axis of attachment, which happens in the absence of wind when the axis of attachment is vertical. The other end position is outside the axis of attachment. If the stabilizing body is in the second end position, the weight of the stabilizing body produces a force moment which tilts the stabilizer and, at the same time, the balloon and/or the hung unit. It is preferable if the course of transition between the first and second end point is inclined against the perpendicular line onto the axis of attachment at at least 1°, preferable at more than 3°, whereby the first end position of the stabilizing body is in the lower position. In this realization the stabilizing body is in the absence of wind kept at first end position, that is, in the axis of attachment, and its weight does not incline or push the balloon and/or the hung unit. Subsequently, in case of the tilting of the balloon by the wind in an angle more than the slope of the course of the stabilizing body, there is a transfer of the stabilizing body into the other end position. The stabilizing body remains in this position until the change in the wind speed does not achieve sufficient decrease. In case of the change of the wind, the balloon moves into a new position on a circular course in a basically horizontal plane, whereby the stabilizing body can remain in the deviated second end position, which leads to gradual rotation of the balloon or the hung unit, respectively, but the rope is not repeatedly wound (rotated).

It is suitable if the aerodynamic effect of the stabilization and weighting effect of the stabilization are mutually combined in a single mean. The stabilizer may have form of a wing, whereby in its lower part there is a hollow track for movement of the stabilizing body.

During measurements it turned out that in an altitude above 100 m the level of noise from the grounds sources decreases significantly. The heat layering of the air also leads to different spread of the noise in individual layers. The balloon in the solution according to this invention is tied at altitude of at least 100 m, preferably more than 300 m, especially preferably more than 500 m.

In order to ensure the stability of the position, it proved to be necessary that the buoyancy force sufficiently surpasses the weight of the balloon, the hung unit (or multiple hung units) and the rope. The even state of the buoyancy and summary weight leads to vertical position of the fiber only at complete absence of wind, which practically never happens. That is why it is good to work with sufficient pressure reserve that is at least at the level of 25% of the weight of the balloon and the hung unit, preferably more than 25% of the summary weight of the balloon, the hung unit and the rope.

The use of the balloon with a single microphone offers a basic information on the presence of the flying object, for example drone in the vicinity of the balloon, does not provide reliable data on direction and position of the drone and so on. The ordering of multiple balloons in a line or in another mutual position, where each balloon carries a single microphone, or use of multiple microphones on a single balloon, allows to determine the position of a drone.

In one aspect of this invention, a single device carries at least three microphones which are distributed in the hung unit in a regular angular pitch around the circumference in a horizontal plane. When tilted in the wind, the horizontal plane of the distribution of the microphones is altered basically alongside the tilt. It is possible to detect, in a single device, the direction of the incoming source of noise. It is possible to determine the direction of the source by comparing the level of a signal that is recognized as a sign of an event. The cross-section of at least two directions is determined from the neighboring devices, and it will determine the position of the source of an event.

The microphone is preferably placed inside the funnel-shaped sound box, which increases the amount of captured acoustic wave in the point of a microphone. The size and shape of the funnel-shaped sound box will be delimited by available dimensions of the hung unit. The body of the sound box can be made from transparent plastics.

In another aspect of this invention, which can be combined with other aspects and realizations, a second group with at least three microphones can be used in a single device, whereby the second group is placed in a different altitude, whereby preferably the difference between altitude will be at least 50 m. Such realization can be achieved in such a way that there is a first group of microphones just below the balloon and the second group is attached on the rope by which the balloon is tethered to the point, or the second group can hang perpendicularly downwards on and independent hinge. The altitude difference ensures that the detection of the event will be directionally more precise.

In another realization the device can include at least one remote-oriented microphone which is spatially designed to be sensitive to distant sources of noise, while the sensitivity to close sources is dampened. The increased sensitivity is achieved by placing the microphone in the focal point of a curved reflective surface. A suitable shape of the reflective surface can achieve variously shaped main scope of the set of microphones and the reflective surface.

Remote-oriented microphone can be construed in such a way that it has two reflective surfaces oriented opposite to each other. The first reflective surface has a larger diameter and directs the signal into the smaller reflective surface; the microphone is placed in or next to the focal point of the second reflective surface. This allows for better positioning of the microphone close to the inside of the hung unit, or even directly on the PCB of the hung unit. In the center of the second reflective surface there can be an opening for direct spread of acoustic wave towards the microphone.

During a short-term deployment of the microphone, it suffices if it is supplied by power by battery or charging accumulator. Preferable arrangement addresses the power supply by means of a rope by which the balloon is bound. The rope in such arrangement fulfils the function of physical tethering and also the function of supplying the circuits in the hung unit by power. The rope can include two metal wires or two metal cables which are separated by isolation, for example an isolation in which an optical fiber for transmitting information is placed.

In order to decrease electric losses in power supply through the rope, it is preferable to use higher voltages, such as ranging from 12 V to 1000 V, so that the size of the transmitted current decreases.

In another arrangement the device includes an electric power generator generating power from wind and/or different electric potential between the balloon and the point of binding. In one such realization, the element for generating electric power can include a pendulum which is hung below the hung unit in a sufficiently quiet distance and in the body of the pendulum there is a mechanism generating electric voltage from the movement of the ballast weight in the mechanism.

If an optical line is used to transfer the energy, the rope can use non-metal material. A material with ultimate tensile strength of 2750 MPa proved preferable. At a diameter of 0,38 mm, it ensures the strength of approximately 300 N, whereby at length of 500 m it weighs 82 g.

A transmission through the rope by which the balloon is bound to the point can be used to transfer the data from the balloon. It is the absence of the radio transmission which makes search for the balloon with the device significantly more difficult, and prevents the jamming of data transfer. The transfer of the data through the rope synergically makes use of the presence of the rope, which in one task mechanically limits the position of the balloon, and in another can serve for the purpose of encrypted and ensured data transfer.

The processing of the signal in the assessment unit can take place in the altitude in the hung unit, or the data can be sent downwards in the unprocessed state or in the partially unprocessed state. The assessment unit can be placed directly next to the microphones in the hung unit without the need to amplify the signal, or it can be placed by the point of binding, or in a remote central.

An analogue microphone signal is digitalized and processed in an assessment unit. The tested method involved digitalization of signal from three microphones, with time stamps, sending the data to the point of binding and subsequent FFT transformation, counting of the peaks for harmonic frequencies, and calculation of cepstrum values, whereby these computational operations took place in the vicinity of the point of attachment. Figures 19 and 20 depict the zones with an identified drone.

The point of binding can be data connected with the central on various platforms, in some cases by physical cables and wires themselves. In a preferably arrangement, the Earth-return telegraph (terrestrial telegraph) with electrode antennas placed in the ground can be used to send data from the point of binding. The Earth-return telegraph (TTE) can be connected to mesh network, where multiple points of binding gradually send the flow of data to the central. The transmission of the Earth-return telegraph can be directionally adjusted which prevents an enemy from detecting or jamming the transmission.

The device with microphones in an altitude according to this invention can be used to detect the source of the even in form of shots or explosions. The device can be used to detect birds in the vicinity of airports.

The device for civilian use can be construed in such a way that all their components have a mechanical strength and size designed for unproblematic destruction once they are sucked into jet engine. Then there would be no risk of damage to a jet engine in case of accidental collision with the device. In practice this means that solid components such as battery or stabilizer wing and so on are small and/or have fragmentation lines prepared in advance and/or are produced from harmless materials.

An advantage of the invention is its relatively simple construction with cheap components which can be easily mass produced. The device has high sensitivity even when common, commercial MEMS microphones are used, since the measurement takes place in an altitude in which the ambient noise is naturally removed.

Synergic effects of the invention simultaneously remedy multiple deficiencies in the prior art. The position of the balloon changes, which makes it more difficult to shoot it down on the basis of, for example, satellite data. The balloon is significantly smaller than airship with motorized stabilization of the position. The invention does not require rotation of the microphone field and simultaneously allows for high-capacity data transfer to the point of binding without radio transmission.

## Description of drawings

The invention is further disclosed by means of figures 1 to 10, 19 to 21. The depicted scales, ratios of sizes of individual components, are for illustration purposes only and cannot be interpreted as limiting the scope of protection.

Figure 1 depicts a coordinate system in which the position of the balloon is determined on the basis of the angle of slope of the rope in the vicinity of the ballon and on the basis of compass in the hung unit. Plane n is horizontal and parallel with plane x, y. Mark X marks the axis of attachment.

Figure 2 is a coordinate system in which the position of the balloon is determined by angle of slope of the rope *beta* by the point of binding, and measuring the angle *alpha* in x,y axis. Mark X marks the axis of attachment.

Figure 3 depicts groundplan distribution of multiple balloons alongside the guarded line, where arrows depict local actual wind direction, angles *alpha* and *beta* differ for each position. Figure 4 is altitude arrangement of the balloons in various altitudes in the field with different rope length; for the purposes of simplicity, the wind speed is zero.

Figure 5 is a body of the hung unit with a mouth of a balloon in a partial axial cross-section, where the accumulator is also a stabilizing body hung in a pin in an axis of the hung unit. Figure 6 is groundplan view depicting angular position of three microphones from figure 5.

Figure 7 is a scheme of the movement of the stabilizing body on the course with hung unit tilted. Subsequently, on figure 8, the stabilizing body has a form of a pendulum, whereby on the left is the position in the absence of wind, and on the right is the position with an axis of attachment inclined.

Figure 9 schematically depicts the position of the second group of microphones on the rope, where the dimension Lx depicts mutual distance of the hung units on the rope on the drawing on the left. On the right, there is a second hung unit hung on the vertical hinge independently on the rope by which the balloon is bound to the point.

Figure 10 is a scheme of gradual connection of multiple balloons into a cascade.

Figure 19 depicts results of FFT analysis of a single microphone channel from an altitude of 280 m for 3 second time segments, where A1 event is a fly over of jet plane, D1 and D2 are drone fly overs. Figure 20 depicts these fly overs A1, D1, D2 in a frequency analysis graph based in temporal dependence. Events D1 and D2 are clearly identified, even if the overall level of acoustic signal is dominant for A1 event.

Figure 21 depicts schemas of remote-oriented microphones. On the left, the microphone is place in the focal point of the funnel-shaped parabolic reflective surface. n the right, two reflective surfaces are arranged to reflect the acoustic wave into the microphone.

**Examples of realization**

Example 1

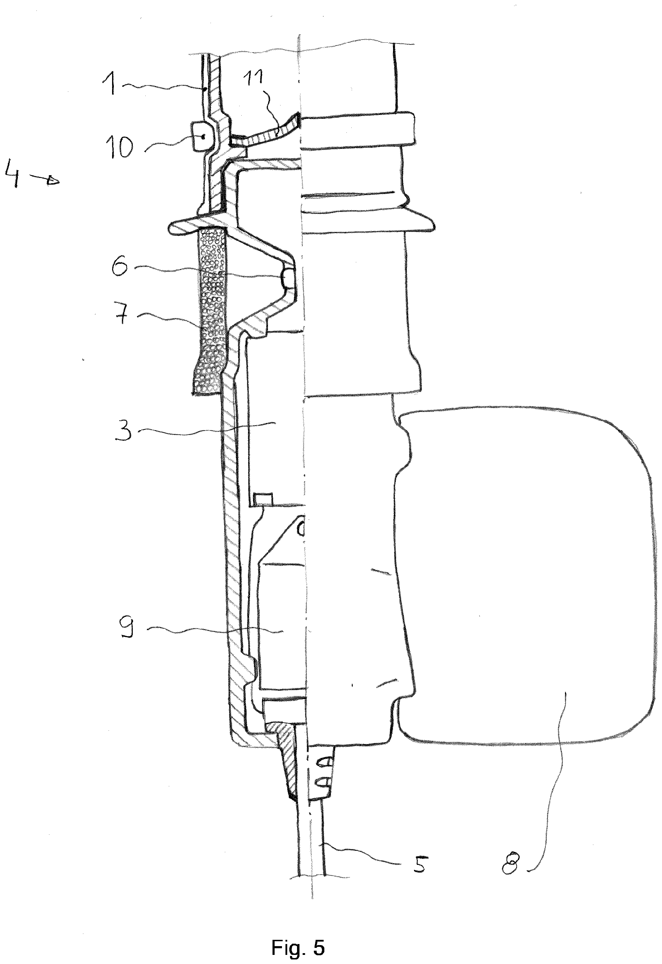

The balloon 1 pursuant to figures 1 to 6 and 8 has a volume of ca. 1,2 m$^3$; the weight of the coat is 45 g. The balloon 1 has a mouth equipped by a plug which is the upper part of the hung unit 4. The plug with a valve 11 follows downwards into a cap which forms a protection against the water flowing from the surface of the balloon. Three microphones 6 are distributed on the circumference in a regularly distributed angular pitches. Each microphone 6 is placed in the mouth of a funnel-shape sound box and the output of the microphone 6 is connected to PCB of the assessment unit 3.

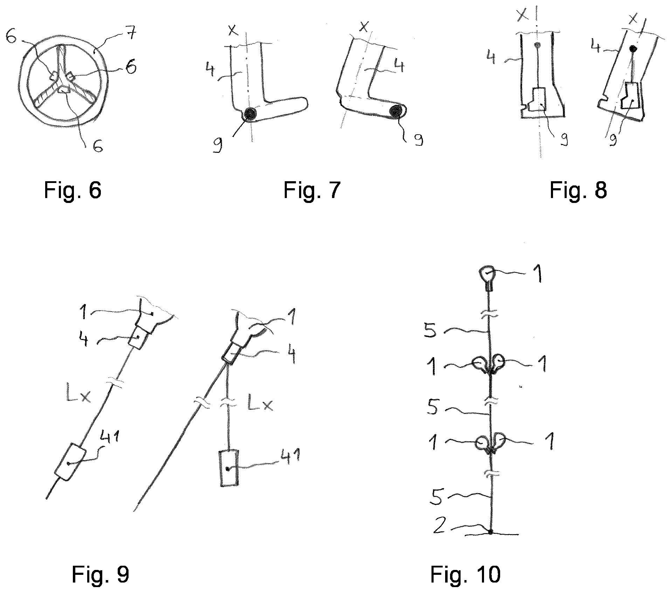

The body of the hung unit 4 proceeds with circular opening downwards, whereby inside this zone there is a PCB. In the bottom part of the body of the hung unit 4 there is a communication unit for optical transfer of information through the optical fiber 51, which is part of the rope 5. The body of the hung unit 4 has a short stabilizing wing 8 in its lower part, which is made from a transparent plastic and is connected to the circumference of the body of the hung unit 4. Inside the body of the hung unit 4 there is a cylindrical accumulator which is on the upper end tiltably placed in the axis of the body of the hung unit 4, whereby the axis of tilting and the space inside the body allow for the accumulator to tilt to the side of the stabilizing wing 8. The accumulator forms a stabilizing body moving as if it was a pendulum 9 according to the figure 8.

The rope 5 consists of an optical fiber 51, cover 511, aramid strength non-metallic fibers 522, and the overall strength is at level of 280 N at measurement weight 1,81 g for 1 m of the rope's length. The rope 5 serves a function of data transfer and also mechanical bind to the point 2 of binding. The point 2 of binding is equipped by a base which contains a holder of the fiber and optical data converter.

The assessment unit 3 analyzes raw data which come in from the microphones 6. An analysis includes FFT analysis and cepstrum calculation. Subsequently, the position of the balloon 1 and the hung unit 4 is calculated. Detection of an event is sent by an optical line in the rope 5, whereby the data concerning the calculated position of the source of the event are sent.

Example 2

In order to achieve higher altitude, a cascade pursuant to figure 10 is used. In first and second step (degree) the balloon 1 is formed by a pair of identical coats. The third step has a single balloon with a hung unit 4 with a stabilization of an angular position by means of a moving stabilizing body 9 which rolls on a sloped course.

Example 3

The remote-oriented microphone 61 on figure 21 on the left is produced in such a way that it includes a reflective surface 62 with approximately parabolical shape in at least one plane. The microphone 6 is attached in the focal point of the curve by means of a thin holder, whereby the sound-sensitives side of the microphone is oriented in the opposite direction - that is, it is directional against the top of the parabola and is not directional against the incoming sound.

In order to achieve more advantageous placement of the microphone, pursuant to figure 21 on the right, two reflective surfaces 621 and 622 are used, which are oriented opposite to each other. The first reflective surface 621 is larger and directs the acoustic waves into the second reflective surface 622, from which these waves enter the microphone 6.

**Industrial applicability**

The industrial applicability is obvious. According to this invention it is possible to repeatedly produce and use device with the bound balloon with the hung unit.

**List of symbols and acronyms**

1 - balloon
2 - point of binding
3 - assessment unit
4 - hung unit
41 - another hung unit
5 - rope

    51 - optical fiber
    511 - cover of the optical fiber
    52 - carrier fiber

        521 - metal carrier fiber
        522 - non-metal carrier fiber

    53 - isolation

6 - microphone

    61 - remote-oriented microphone
    62 - reflective surface

        621 - first reflective surface
        622 - second reflective surface

7 - damper
8 - stabilizing surface
9 - stabilizing body
10 - clip
11 - valve
x, y, z - coordinate system
alfa - angle
beta - angle
L - rope's length
X - axis of attachment
S - south
N - north
A - airplane event
D - drone event
GNSS - Global Navigation Satellite System
FPV - first person view
m n.v. - altitude in meters above sea level
TTE - Through-the-Earth

**Claims**

1. A device for detecting drones which includes at least one microphone (6) and an assessment unit (3) connected with the microphone (6), where at least one microphone (6) is attached above ground to a flying object which is bound with a point (2) of binding by means of a rope (5), and where the assessment unit (3) is designed to detect a sound of the drone, **is characterized by the fact**, that
the microphone (6) is carried by an engineless balloon (1), carried in a wind, whereby the balloon (1) is bound with the point (2) of binding.

2. The device according to the claim 1 **is characterized by the fact**, that the microphone (6), preferably at least three microphones (6) in regular angular pitches on a horizontal plane, are placed in a hung unit (4) which is present below the balloon (1).

3. The device according to the claim 1 or 2 **is characterized by the fact**, that at least one microphone (6) is placed in another hung unit (41) which is present below the hung unit (4), whereby another hung unit (41) is placed on the rope (5) or in a hinge stemming from the hung unit (4).

4. The device according to any of the claims 1 to 3 **is characterized by the fact**, that it has an element to determine an actual position of the balloon (1) and/or the actual position of the hung unit (4).

5. The device according to the claim 4 **is characterized by the fact**, that the element to determine the actual position includes a sensor of a slope *beta* of an axis X of an attachment against a horizontal plane, and a sensor of an angular position *alpha* between a north - south orientation and a projection of the axis X of the attachment to the horizontal plane.

6. The device according to any of the claims 1 to 5 **is characterized by the fact**, that it includes a sensor of a rotation of the balloon (1) and/or the hung unit (1) against the north - south orientation.

7. The device according to any of the claims 2 to 6 **is characterized by the fact**, that the hung unit (4) is equipped by a stabilizer, preferably the stabilizer includes a stabilizing surface (8) and a movably placed stabilizing body (9), where the stabilizing surface (8) is oriented in the direction which is identical or parallel with a vertical plane in which the course of a movement of the stabilizing body (9) lies.

8. The device according to any of the claims 2 to 7 **is characterized by the fact**, that a buoyancy force of the balloon (1) surpasses a summary weight of the balloon (1), the hung unit (4), and an unwound part of the rope (5) by at least 25%.

9. The device according to any of the claims 1 to 8 **is characterized by the fact**, that it includes multiple balloons (1) which are distributed gradually in an altitude and which are bound by one line of the rope (5) to the point (2) of binding.

10. The device according to any of the claims 1 to 8 **is characterized by the fact**, that the microphone (6) is placed in a mouth of a funnel-shaped sound box or in a focal point of a reflective surface (62) or it is placed against a second reflective surface (622) into which a first reflective surface (621) is directed.

11. The device according to any of the claims 1 to 10 **is characterized by the fact**, that the rope (5) carries or includes a mean for data transfer, preferably for two-way data transfer.

12. The device according to any of the claims 1 to 11 **is characterized by the fact**, that the rope (5) carries or includes a mean for energy transfer towards the balloon (1).

13. The device according to any of the claims 1 to 12 **is characterized by the fact**, that it includes a mean for obtaining electric power from a flow of an air by the balloon (1) and/or from a different electric potential between the balloon (1) and the point (2) of binding.

14. The device according to any of the claims 1 to 13 **is characterized by the fact**, that it is connected to an Earth-return telegraph which has at least one electrode placed in the ground for a transmission of a modulated signal; preferably multiple points (2) of binding with multiple Earth-return telegraphs form a mesh network for a transfer of data into a central.

15. A method of detecting a drone, where at least one microphone (6) senses an ambient sound and in sensed data the sound coming from the drone is recognized as an event (D) **is characterized by the fact**, that the microphone (6) or multiple microphones (6) are carried by a balloon (1) which is connected to a point (2) of binding by a rope (5) and the balloon (1) is freely carried in a wind, whereby data about the balloon's (1) position is assigned to data from the microphone (6) and when determining a direction and a distance of the drone the data about the actual position of the balloon (1) at a time of the event (D) are taken into account.

Fig. 1

Fig. 2

Fig. 3

Fig. 4

Fig. 5

Fig. 6

Fig. 7

Fig. 8

Fig. 9

Fig. 10

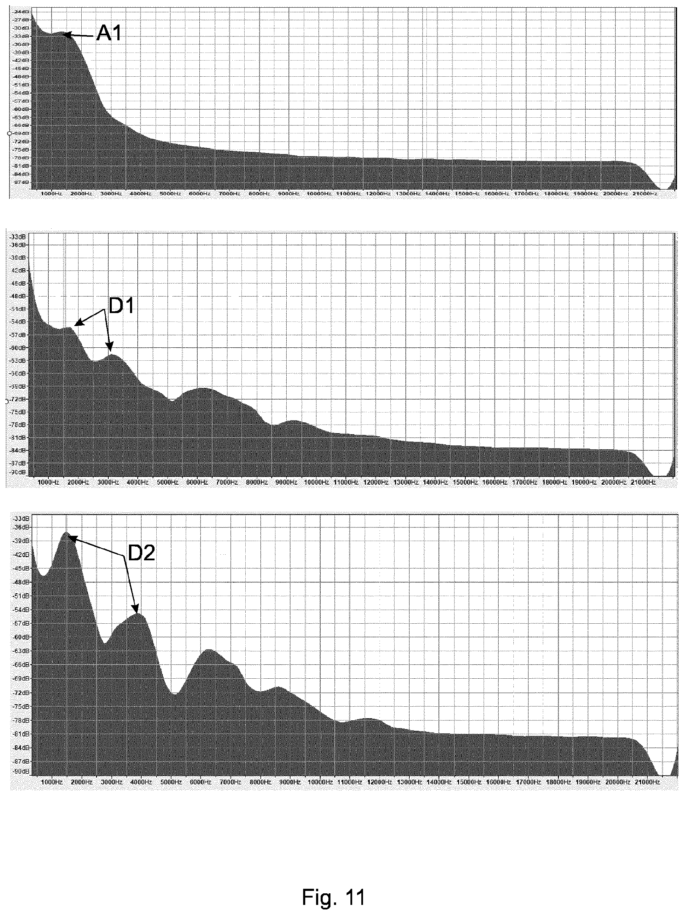

Fig. 11

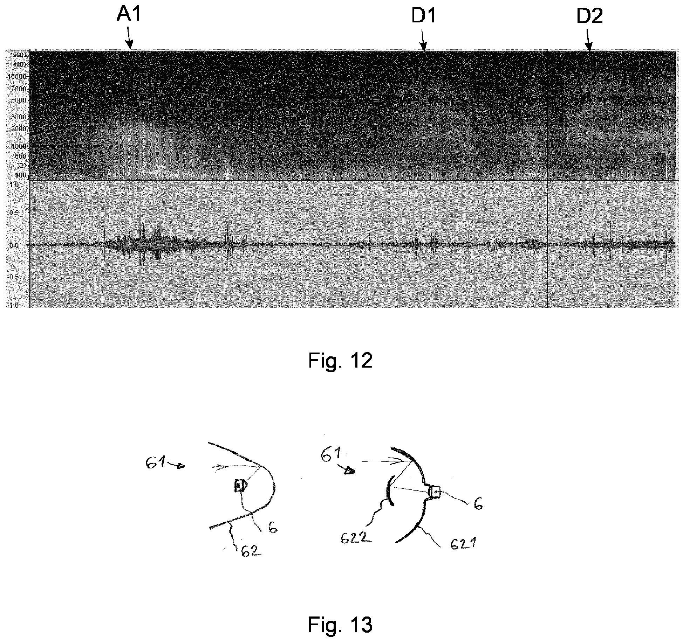

Fig. 12

Fig. 13

Europäisches
Patentamt
European
Patent Office
Office européen
des brevets

# EUROPEAN SEARCH REPORT

**Application Number**

EP 24 17 9056

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/062392 A1 (YOON SUNG WOOK [KR]) 27 February 2020 (2020-02-27) | 1,4-15 | INV. B64B1/50 |
| Y | * abstract; figures 1, 2, 6 * * paragraphs [0032], [0033], [0038], [0039], [0057], [0062], [0065], [0073] * | 2,3 | B64U10/30 B64U10/60 B64F1/36 G01S5/02 G01S5/20 |
| A | ----- CN 116 639 286 A (AEROSPACE INFORMATION RESEARCH INSTITUTE CHINESE ACADEMY OF SCIENCES) 25 August 2023 (2023-08-25) * abstract; claims 1, 6, 9, 10; figures 1-3 * | 1-15 | G06T7/55 |
| Y | ----- CN 107 115 687 B (UNIV BEIJING CHEM TECH) 30 May 2023 (2023-05-30) | 2 | |
| A | * abstract; claim 1; figures 1-3, 8 * | 1,3-15 | |
| Y | ----- CN 110 581 983 A (CHINA AGRICULTURAL AVIATION JILIN CO LTD) 17 December 2019 (2019-12-17) | 3 | |
| A | * abstract; claims 1, 5; figures 1-3 * ----- | 1,2,4-15 | **TECHNICAL FIELDS SEARCHED (IPC)** B64F G06T G01S B64U B64B |

The present search report has been drawn up for all claims

| Place of search | Date of completion of the search | Examiner |
|---|---|---|
| Munich | 27 September 2024 | Podratzky, Andreas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                                                   
& : member of the same patent family, corresponding document

EPO FORM 1503 03.82 (P04C01)

# EP 4 656 511 A1

## ANNEX TO THE EUROPEAN SEARCH REPORT
## ON EUROPEAN PATENT APPLICATION NO.

EP 24 17 9056

This annex lists the patent family members relating to the patent documents cited in  the above-mentioned European search report.
The members are as contained in the European Patent Office EDP file on
The European Patent Office is in no way liable for these particulars which are merely given for the purpose of information.

27-09-2024

| Patent document cited in search report | | Publication date | Patent family member(s) | | Publication date |
|---|---|---|---|---|---|
| US 2020062392 | A1 | 27-02-2020 | CN<br>US | 110855936 A<br>2020062392 A1 | 28-02-2020<br>27-02-2020 |
| CN 116639286 | A | 25-08-2023 | NONE | | |
| CN 107115687 | B | 30-05-2023 | NONE | | |
| CN 110581983 | A | 17-12-2019 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017077348 A

- US 11594141 B